# EUROPEAN PATENT APPLICATION

(11) **EP 0 838 147 A1**
(43) Date of publication of application: **29.04.1998**
(21) Application number: 97202884.9
(22) Date of filing: 19.09.1997
(51) Int. Cl.: A01F 25/20, A01K 5/00

(54) **Mixing device and method for mixing fodder**

(30) Priority: 03.10.1996 NL 1004180
(71) Applicant: Trioliet Mullos B.V., 7570 AC Oldenzaal (NL)
(72) Inventor: van der Plas, Nicolaas, 7576 WB Oldenzaal (NL)
(74) Representative: Louet Feisser, Arnold

(57) **Abstract**

A device for mixing fodder comprising a chamber (3) into which fodder or the like material can be deposited via a filling opening (13), in particular for mixing fodder, in which chamber (3) bar-shaped elements (10) are moved in their transverse direction in an endless path extending past said filling opening (13). A cutting member (16) is provided near one edge of the filling opening (13), along which cutting member (16) the elements (10) are capable of movement, so that an edge of each element (10) and an edge of the cutting member (16) together carry out a cutting operation on the fodder present near the edges. The edge of the cutting member (16) includes an angle, at least partially so, with the edge of the element (10) co-operating therewith, so that the cutting operation is carried out during the movement of said element over a selected distance.

## Description

The invention relates to a device comprising a chamber into which fodder or the like material can be deposited via a filling opening, in particular for mixing fodder, in which chamber bar-shaped elements are moved in their transverse direction in an endless path extending past said filling opening. The bar-shaped elements are capable of moving through the fodder thereby, as a result of which the fodder is loosened and/or various components of the fodder are mixed. A device of this kind is known from EP-A-0 679 329.

With a device of this kind the path in which the bar-shaped elements move in transverse direction may extend along the bottom and the walls of the chamber, so that the fodder is carried along the bottom to a wall of the chamber, and moved in upward direction from there, after which it will fall down again, which results in an adequate mixing of the fodder. In addition to that an outflow opening may thereby be present in the wall of the mixing chamber, through which the fodder can be taken outside the mixing chamber by the action of the bar-shaped elements. The fodder may thereby be deposited on a conveyor belt, which transports the fodder to a place where it can be consumed by the animals.

With such a device, wherein the bar-shaped elements are moved in an endless path, the filling opening is usually provided in such a manner that the fodder being introduced into the chamber through the filling opening passes said path of the bar-shaped elements. Fodder may thereby land on the bar-shaped elements, so that said bar-shaped elements may seize as a result of the fodder getting wedged between the bar-shaped elements and the wall of the chamber.

The aforesaid publication EP-A-0 679 329 discloses a solution for this problem, whereby specially provided means remove from said bar-shaped elements the fodder that has landed on the bar-shaped elements during the filling of the mixing chamber. In practice it has become apparent that this solution is not entirely satisfactory with certain kinds of fodder.

The object of the invention is to provide a device for mixing fodder, wherein the fodder is deposited into a mixing chamber via a filling Opening, and wherein the mixing means, which are made up of bar-shaped elements, which move in transverse direction, cannot seize as a result of fodder landing on the bar-shaped elements during the filling of the mixing chamber.

According to the invention a cutting member is to that end provided near one edge of the filling opening, along which cutting member said elements are capable of movement, so that an edge of each element and an edge of the cutting member together carry out a cutting operation on the fodder present near the edges. In this way the fodder, in particular those components of the fodder that consist of longer fibres, such as grass, are cut through when said fibres threaten to block the movement of the bar-shaped elements. After said fibres have been cut through, they will fall down onto the bottom of the mixing chamber, after which they will be subjected to the mixing operation.

According to another aspect of the invention the cross-sectional configuration of said bar-shaped element and/or said cutting member is such that the edge in question has an acute angle, preferably an angle which is smaller than 45°, In practice it has become apparent that a satisfactory operation can be obtained with bar-shaped elements having a substantially rectangular cross-section, and with a cutting member having an edge whose aforesaid angle is about 45°.

According to another aspect of the invention a second cutting member may be provided, which is disposed substantially parallel to the aforesaid cutting member, with the bar-shaped element being capable of movement between said cutting members, whereby said element carries out a cutting movement in co-operation with each of said cutting members.

In one preferred embodiment the edge of said cutting member includes an angle, at least partially so, with the edge of the element co-operating therewith, so that the cutting operation is carried out during the movement of said element over a selected distance. As a result of this the fodder present on a mixing element is not cut through in one go, but said cutting takes place during the movement of said bar-shaped element, thus preventing a situation whereby the power required for cutting through the fodder must be delivered for a very short time. The occurrence of sudden large forces is prevented in this manner.

According to another aspect of the invention the edge of the cutting member is V-shaped, whereby said cutting member is positioned near the lower edge of the filling opening, so that said edge slopes downward towards the centre. In another embodiment the edge of the cutting member may also be knurled or serrated.

In one preferred embodiment two endless chains are present, between which the bar-shaped elements extend, and to which the elements are coupled with their ends. Furthermore stationary guide rails are provided in one preferred embodiment, which function to guide the ends of said bar-shaped elements during their movement along the cutting member. This is conducive to achieving a correct position of the bar-shaped elements during the execution of the cutting operation.

According to the invention the driving gear for moving the elements is provided with a slip clutch or a shear clutch, so that the movement of the bar-shaped elements is stopped as soon as an excessive force is needed during the cutting operation or otherwise. This prevents the device from being subjected to excessive forces.

The invention furthermore relates to a method for depositing fodder or the like material via a filling opening into a chamber in which the fodder can be mixed. According to the invention the fodder that lands on or near an edge of the filling opening is cut through by a cutting member disposed near the edge of the filling opening, which co-operates with a bar-shaped element when carrying out the cutting operation, which bar-shaped element is moved past said cutting member. The fodder may land near the aforesaid edge because it falls onto said edge during filling, it may also land there, however, because it lands on a bar-shaped element, which is subsequently moved towards said edge.

According to another aspect of the invention various components of the fodder to be mixed are deposited into the chamber through the filling opening, whereby components which consist of longer parts, such as grass, are deposited first. When the mixing chamber is being filled in particular these longer parts may land near the edge of the filling opening, so that they must be cut through. By depositing these longer parts into the mixing chamber first it is achieved that the cutting operation at the edge of the filling opening is carried out in particular at moments that the mixing chamber is still only partially filled with fodder, so that the mixing requires less energy from the mixing elements at that point in time. At that point more power is available for carrying out said cutting operation.

Further aspects of the invention, which may be used both separately and in combination with each other, will be described hereafter with reference to the Figures and be defined in the claims.

Hereafter a few embodiments of the device for mixing fodder will be explained by way of illustration, whereby reference will be made to the Figures.
Figure 1 shows a device for mixing fodder;
Figure 2 is a longitudinal sectional view of the device according to the invention;
Figures 3, 4 and 5 each show an alternative embodiment of a part of Figure 2;
Figure 6 shows yet another embodiment of a part of Figure 2; and
Figure 7 is a view of a cutting member.

The Figures are merely diagrammatic illustrations, wherein like parts are numbered alike.

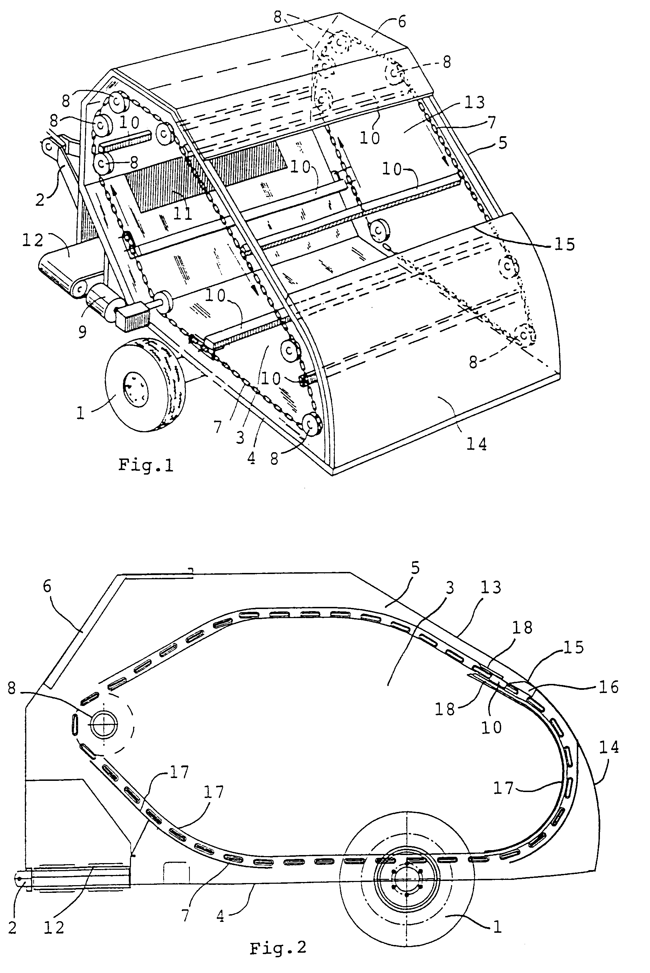

The device shown in Figure 1 is provided with wheels 1 and can be coupled to a tractor by coupling means 2. The device substantially consists of a mixing chamber 3, which is provided with a bottom 4, two side plates 5, the front one of which has been left out in Figure 1 in order to provide an inside view of the device, and furthermore walls 6, which enclose the mixing chamber. Present within the mixing chamber 3 are two endless chains 7, which are guided into a path through mixing chamber 3 by means of guide wheels 8 (chain wheels). Chains 7 are driven by means of a motor 9, and the two chains 7 are coupled in such a manner that they move at the same velocity. Motor 9 is a hydraulic motor, for example. Chains 7 and mixing members 10 may also be driven via the power take-off shaft of the tractor.

Mixing members 10 are disposed between chains 7, which mixing members consist of one or more metal bars, which are coupled to chains 7 with their ends. The fodder present in the mixing chamber, or other material, is loosened and or mixed as a result of the movement of mixing members 10 through mixing chamber 3.

The fodder loosened and mixed in mixing chamber 3 can be discharged from mixing chamber 3 via outlet 11, which may be provided with a shut-off valve (not shown), for opening and closing the outlet. The fodder which is removed from the mixing chamber via outlet 11 lands on conveyor belt 12, which can be driven in either direction, so that the fodder can be delivered to the feeding place of the animals on the left-hand side or on the right-hand side of the device, according to which is desired.

Filling opening 13 is provided to make it possible to deposit the fodder or other material, for example silage material, into the mixing chamber. When the mixing chamber is to be filled the tractor can move the device to a position close to ensilaged fodder, after which pieces or cut-off or sawn-off fodder are moved upwards along cylindrical wall portion 14 and subsequently fall through filling opening 13. In order to introduce the fodder into the mixing chamber in this manner the device may be provided with special means which are not shown in the Figures, but which are for example described in EP-A-0 506 158. The pieces of silage material which have been introduced into the mixing chamber in this manner are loosened in the mixing chamber and possibly mixed with other fodder components.

It has become apparent that during the filling of the mixing chamber parts of the material land on mixing members 10 in such a manner that the material is carried along by mixing members 10. Especially when the material contains long fibres, there is a possibility of the material sticking to mixing members 10 in this manner. In order to prevent such material from finding its way between a mixing member 10 and the wall in such a manner as to cause the mixing member to seize, a cutting member 16 (Figure 2) is provided near edge 15 of filling opening 13, which cutting member is capable of carrying out a cutting operation in co-operation with bar-shaped mixing member 10. The fibres present in the fodder are cut through thereby, and the fodder will subsequently fall down onto the bottom 4 of mixing chamber 3.

Figure 2 shows a device similar to the one shown in Figure 1, and that in longitudinal section. With the device according to Figure 2 chains 7 are driven by means of chain wheels 8 and said chains are furthermore guided by guide rails 17, which are disposed at several locations along the path of the chain. Figure 2 shows only one of the mixing members 10 whose ends are coupled to chain 7.

Chains 7 and the mixing members move in clockwise direction, seen in Figure 2, whereby the mixing members pass filling opening 13 when moving along the upper part of mixing chamber 3. A substantially horizontally extending cutting member 16 is provided near edge 15, on the underside of filling opening 13, which cutting member 16 is capable of carrying out a cutting operation in co-operation with the passing mixing members 10. At the place where the mixing members carry out a cutting operation chains 7, and thus the two ends of mixing member 10, are guided by a special guide rail 18, which is disposed near the edge of the filling opening.

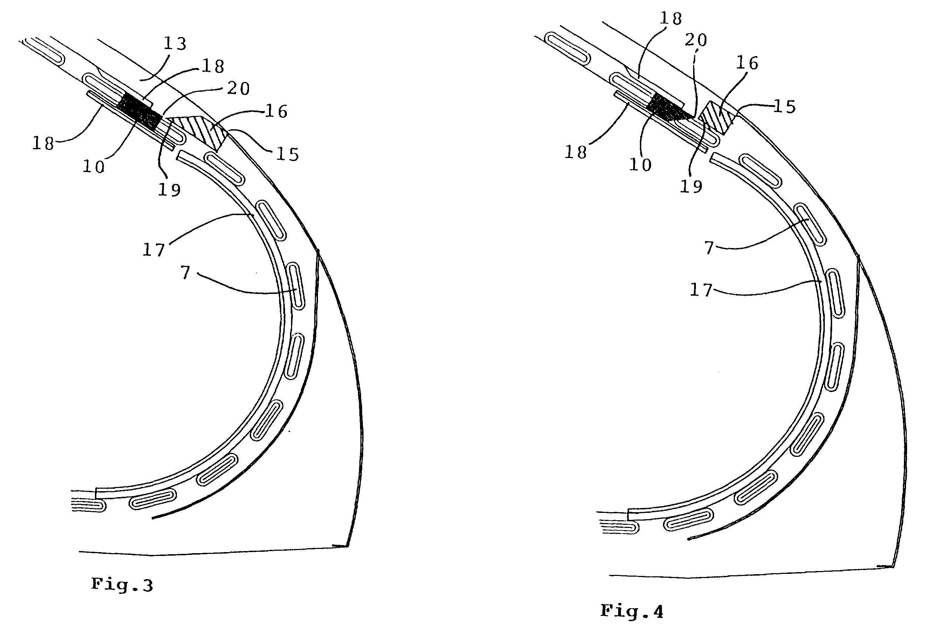

Figure 3 shows in more detail edge 15 on the underside of filling opening 13, showing the cutting member 16 provided near edge 15 in cross-sectional view. Cutting member 16 comprises an edge 19 having an acute angle, seen in cross-sectional view, which edge is capable of co-operating with edge 20 of mixing member 10, so that a cutting operation can be carried out when mixing member 10 passes cutting member 16.

Figure 4 shows an embodiment wherein mixing member 10 comprises an edge 20 having an acute angle, whilst edge 19 of cutting member 16 has an substantially right angle.

Furthermore it is possible to configure both edges 19, 20 with an acute angle.

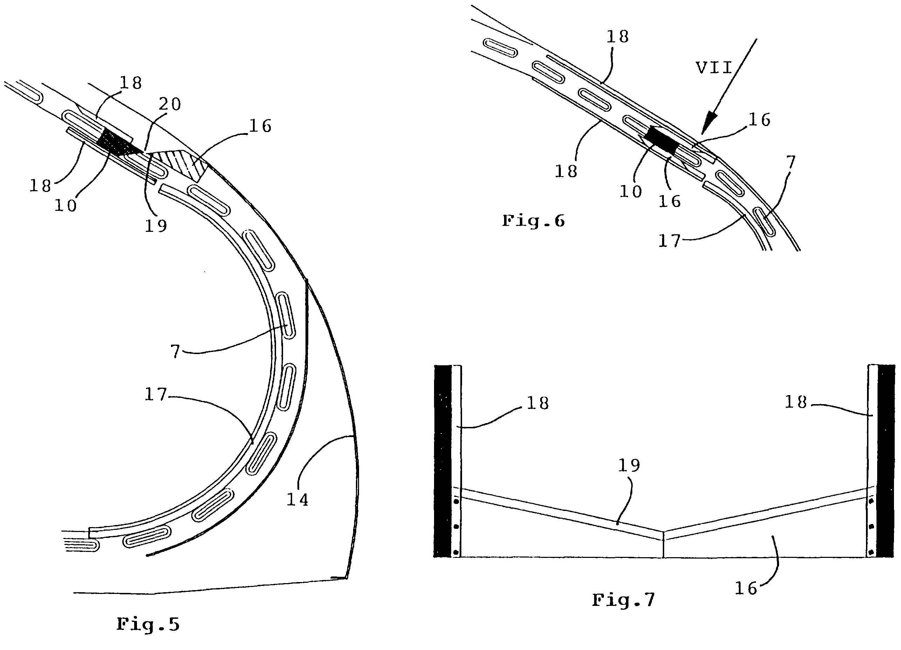

In another embodiment, a detail of which is shown in Figure 6, two cutting members 16 are present on either side of mixing member 10. Both mixing members 16 are configured to have an acute angle, whilst mixing member 10 is configured to have a substantially rectangular cross-section. Two cutting operations take place with this embodiment, which may enhance the reliability of the device.

Figure 7 is a front view of a cutting member, seen in the direction indicated by arrow VII in Figure 6. Edge 19 of cutting member 16 is V-shaped thereby, comprising two straight parts including an angle with each other. When a bar-shaped mixing member passes said cutting member, edge 20 of mixing member 10 is disposed at an angle with respect to edge 19 of cutting member 16, so that the cutting operation is carried out during a predetermined movement of the mixing member. The cutting operation is thereby carried out in a scissor-like manner, in order that no undesirably great forces will be required for carrying out the cutting operation.

The edge of the cutting member may also be knurled or serrated, which may help to improve the cutting operation.

The illustrated embodiments are merely examples, the invention may also be implemented in another manner.

## Claims

1. A device comprising a chamber into which fodder or the like material can be deposited via a filling opening, in particular for mixing fodder, in which chamber bar-shaped elements are moved in their transverse direction in an endless path extending past said filling opening, characterized in that a cutting member is provided near one edge of the filling opening, along which cutting member said elements are capable of movement, so that an edge of each element and an edge of the cutting member together carry out a cutting operation on the fodder present near the edges.

2. A device according to claim 1, characterized in that said elements are mixing members, which are capable of mixing the fodder in said chamber.

3. A device according to any one of the preceding claims, characterized in that the edge in question of said element and/or of said cutting member is formed with an acute angle, seen in cross-sectional view, preferably an angle of less than 45°.

4. A device according to any one of the preceding claims, characterized in that a second cutting member is provided substantially parallel to said cutting member, with the bar-shaped element being capable of movement between said cutting members, whereby said element carries out a cutting movement in co-operation with each of said cutting members.

5. A device according to any one of the preceding claims, characterized in that the edge of said cutting member includes an angle, at least partially so, with the edge of the element co-operating therewith, so that the cutting operation is carried out during the movement of said element over a selected distance.

6. A device according to claim 5, characterized in that the edge of said cutting member is V-shaped.

7. A device according to any one of the preceding claims, characterized in that the edge of said cutting member is knurled or serrated.

8. A device according to any one of the preceding claims, characterized in that two endless chains are present, between which said bar-shaped elements extend and to which said elements are coupled with their ends.

9. A device according to any one of the preceding claims, characterized in that stationary guide rails are provided, which function to guide the ends of said bar-shaped elements during their movement along the cutting member.

10. A device according to any one of the preceding claims, characterized in that the driving gear for moving the elements is provided with a slip clutch or a shear clutch.

11. A method for depositing fodder or the like material via a filling opening into a chamber in which the fodder can be mixed, characterized in that the fodder that lands on or near an edge of the filling opening is cut through by a cutting member disposed near the edge of the filling opening, which co-operates with a bar-shaped element when carrying out the cutting operation, which bar-shaped element is moved past said cutting member.

12. A method according to claim 11, characterized in that various components of the fodder to be mixed are deposited into the chamber through the filling opening, whereby components which consist of longer parts, such as grass, are deposited first.
